# DEMANDE DE BREVET EUROPEEN

(11) **EP 2 088 511 A1**
(43) Date de publication de la demande: **12.08.2009**
(21) Numéro de dépôt: 09290044.8
(22) Date de dépôt: 22.01.2009
(51) Int. Cl.: G06F 12/08

(54) **Système informatique multiprocesseur**

(30) Priorité: 07.02.2008 FR 0800653
(71) Demandeur: Bull S.A.S., 78340 Les Clayes sous Bois (FR)
(72) Inventeur: Chicheportiche, Jordan, 75014 Paris (FR); Derradji, Saïd, 92130 Issy-les-Moulineaux (FR)

(57) **Abrégé**

Le système informatique comportant une pluralité de groupes (10) multiprocesseur, dits noeuds (10), un contrôleur de noeud (20) implanté dans chacun des noeuds (10) et connecté dans son groupe (10) à au moins un processeur (12), un réseau d'interconnexion entre lesdits contrôleurs de noeuds (20), un ensemble de mémoires, chacune associée à un contrôleur (15) de mémoire.

Le système est agencé de façon à ne pas implémenter un tableau d'adresses exportées dans le contrôleur de noeud (20), pour réduire la surface de silicium utilisée. Un vecteur appelé vecteur de présence (VP) est prévu pour représenter l'état d'utilisation de chacune des adresses mémoire. Ce vecteur est stocké dans un répertoire (150) du contrôleur de mémoire (15) de chacun des noeuds (10). II permet de référencer une localisation d'hébergement possible pour l'adresse mémoire associée. Le tableau des adresses importées peut être conservé dans le contrôleur de noeud (20).

## Description

### DOMAINE TECHNIQUE DE L'INVENTION

La présente invention se rapporte, dans le domaine de l'informatique, aux systèmes à processeurs multiples formés par la réunion de modules (également appelés noeuds) rassemblant chacun plusieurs processeurs. Ces systèmes sont couramment appelés SMP (Symmetric MultiProcessing). L'invention concerne en particulier un système informatique multiprocesseur à plusieurs noeuds, doté d'une structure découpée en modules permettant d'augmenter le nombre de processeurs dans le système (en augmentant le nombre de modules).

### ARRIERE-PLAN TECHNOLOGIQUE DE L'INVENTION

Les systèmes informatiques de faible puissance de traitement comprennent un seul processeur auquel sont associés une mémoire, des dispositifs d'entrée/sortie et des systèmes de stockage de masse (disques durs, stockage optique, disques à bande magnétique et similaire).

Lorsque la puissance de traitement requise est plus importante, au-delà de ce qu'il est possible d'obtenir à l'aide d'un système informatique monoprocesseur, des processeurs multiples doivent être couplés ensemble par un ou plusieurs bus.

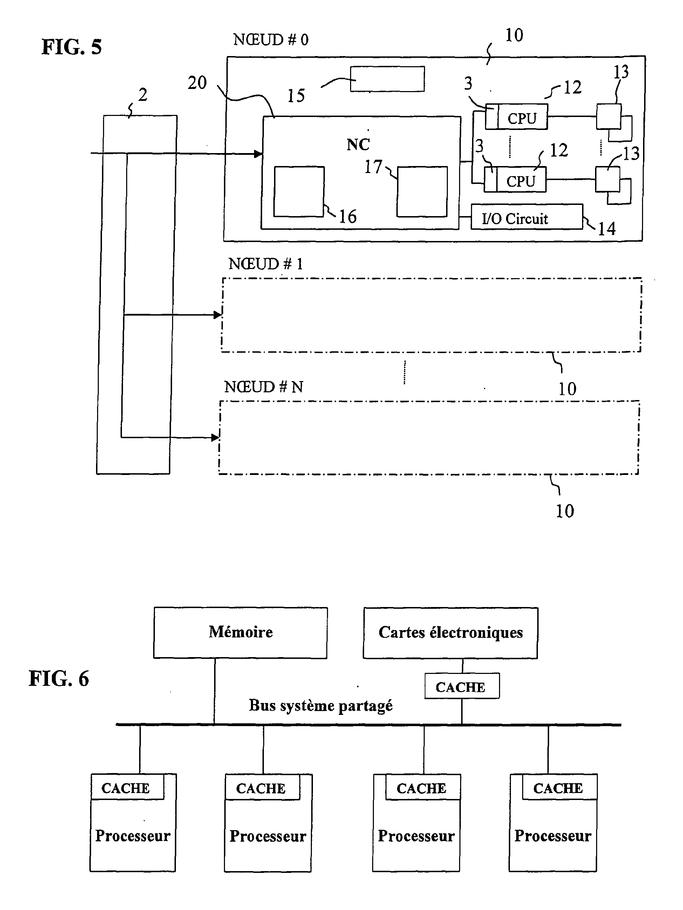

De façon connue en soi, les systèmes de type SMP sont dotés d'une structure partitionnée en modules ou noeuds. La technologie SMP (Symmetric multiprocessing) est une méthode utilisée dans les serveurs réseaux multiprocesseurs. Dans le cas d'un serveur SMP, les mémoires (et tous les périphériques internes) sont partagées entre tous les processeurs qui les utilisent conjointement. Une architecture informatique de type SMP est une architecture qui consiste ainsi à multiplier les processeurs au sein d'un ordinateur, de manière à augmenter la puissance de calcul. L'augmentation du nombre de processeurs permet d'exécuter simultanément un plus grand nombre de processus du système utilisateur ou noyau, en leur allouant l'un ou l'autre des processeurs disponibles. La figure 6 illustre un exemple d'architecture SMP conventionnelle. Le document "STARFIRE: Extending the SMP Envelope" IEEE Micro, Janvier-Février 1998, Vol. 18, 1ère édition, pages 39-49, illustre un type d'architecture SMP avec une commutation crossbar. Il est également connu, par exemple par "The Stanford FLASH Multiprocessor" (21 st ISCA Proceedings) ou par le document US 7 047 372, un type d'architecture SMP avec utilisation de répertoires (directories) référençant les adresses mémoires utilisées par les différents processeurs. Dans la gamme existante de serveurs NovaScale® commercialisée par la société BULL, des serveurs sont proposés avec une architecture SMP qui utilise ce type de répertoires.

Les systèmes de type SMP à plusieurs noeuds requièrent un protocole de cohérence de cache pour suivre au cours du temps les localisations d'hébergement des adresses mémoires utilisées par les différents processeurs. Ce protocole est nécessaire dans ce type de système qui utilise un cache associé à chacun des processeurs. Comme une variable peut être partagée par plusieurs processus, on peut avoir plusieurs copies dans plusieurs caches de la valeur de la variable qui est partagée en mémoire. Si une des copies est modifiée par un des processeurs, il faut effectuer des mises à jour dans tous les autres caches où il existe une copie de cette variable si l'on veut maintenir la cohérence. Dans des serveurs SMP tels que les serveurs NovaScale® 5005 de la société BULL, plusieurs processeurs formant les noeuds respectifs sont associés et la cohérence des données traitées dans le système est permise notamment à l'aide d'une puce électronique regroupant typiquement différents agents identifiables de traitement d'un protocole de cohérence du cache. Dans un système SMP, un noeud peut être défini comme un groupement topologique d'agents / processeurs. D'un point de vue fonctionnel, les échanges entre agents de noeuds différents passent nécessairement à travers un contrôleur d'interconnexion appelé contrôleur de noeud NC (Node Controller selon la terminologie anglo-saxonne). Physiquement, les différents agents peuvent être groupés dans une même puce et donc partager les mêmes liens pour communiquer avec le reste du système.

Les protocoles de cohérence utilisent avantageusement des répertoires pour conserver la piste de l'information partagée. Dans chaque noeud d'un tel système SMP connu de l'art antérieur, un contrôleur de mémoire (15) comporte un répertoire (150) gérant les adresses mémoires à l'intérieur du noeud, tandis qu'un contrôleur de noeud (20) comporte un premier répertoire (16) gérant des adresses mémoires distantes qui ont été importées dans le noeud (« imported directory », selon la terminologie anglo-saxonne) et un second répertoire (17) gérant les adresses locales qui ont été exportées vers d'autres noeuds (« exported directory », selon la terminologie anglo-saxonne).. L'information partagée relative à un bloc de mémoire (adresse mémoire) déterminé comprend généralement un état de cache du bloc et l'identité des autres noeuds qui partagent ce bloc. Typiquement, les répertoires sont distribués parmi tous les noeuds.

Le protocole de cohérence de cache est désormais bien connu et ne sera pas détaillé ici. Cependant, de façon à expliquer le problème des systèmes de l'art antérieur que la présente invention se propose de résoudre, il est nécessaire d'expliquer le fonctionnement de ce protocole de cohérence au sein des systèmes multiprocesseur connus de l'art antérieur. Le document US 7 130 969 est cité ici à titre d'exemple de système multiprocesseur doté de répertoires pour la cohérence de cache. Le protocole MESI OU MESIF (Modified, Excluded, Shared, Invalid, Forward) de la société INTEL Corporation est un exemple non limitatif de protocole de cohérence de cache (on peut se référer notamment au document US 6 922 756 pour le protocole MESIF).

Les systèmes de type SMP antérieurs ont implémenté les répertoires de deux façons : systèmes « full directory » et « sparse directory ». Les systèmes à répertoire complet « full directory » stockent l'information partagée au plus près de chaque bloc de la mémoire principale; ces systèmes gaspillent une quantité significative de mémoire physique car une entrée de répertoire est requise pour tous les blocs de la mémoire principal même si le bloc n'a aucun cache associé dans le système.

Les systèmes à répertoire clairsemé « sparse directory » sont préférés car ils stockent en blocs mémoire seulement l'information partagée qui est stockée en cache au niveau de processeurs distants. Ainsi, la quantité de mémoire utilisée pour conserver la cohérence de l'information partagée est directement proportionnelle au nombre de blocs mémoire qui peuvent être stockés dans la mémoire cache d'un processeur élémentaire.

Les répertoires correspondent à des tableaux indiquant, pour chacun des blocs de cache de la mémoire principale, un ou des processeurs pour lesquels une copie est stockée en mémoire cache. Des répertoires typiquement prévus pour chacun des noeuds sont stockés dans la mémoire intégrée (dans le cache) d'un contrôleur de noeud. Des mémoires séparées de type RAM (par exemple SRAM ou eDRAM) sont utilisées pour le stockage des systèmes à répertoire clairsemé. Ces mémoires séparées sont interfacées avec le contrôleur de répertoire du contrôleur de noeud NC.

Les répertoires peuvent donc être utilisés par les contrôleurs de noeud pour envoyer des messages appelés « snoops » servant à interroger les mémoires du système susceptibles d'avoir une copie afin de connaître l'état des données du cache des processeurs. Les répertoires permettent d'implémenter un filtrage des messages pour n'adresser que les processeurs concernés. On comprend que cette construction permet de réduire significativement le trafic de données.

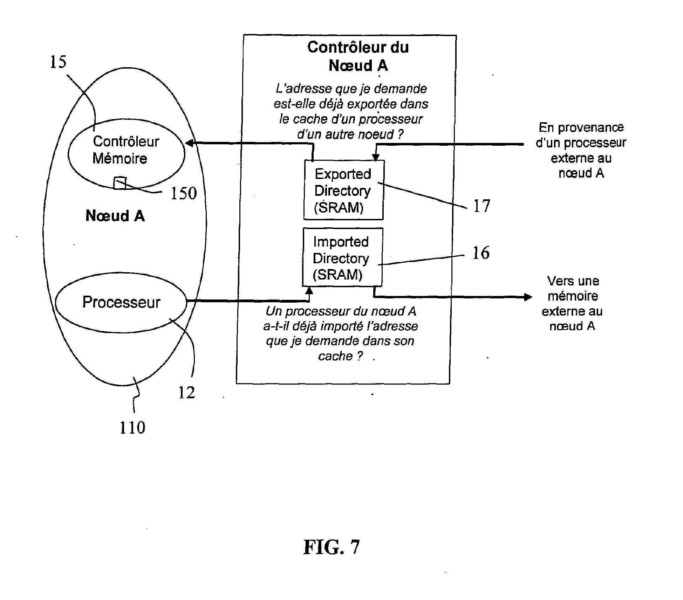

Comme illustré à la figure 5, des serveurs SMP connus dans l'art antérieur comprennent typiquement plusieurs noeuds (10) comprenant chacun un contrôleur de noeud (20) et reliés entre eux par un réseau (2) d'interconnexion entre les contrôleurs de noeuds (20), par exemple une ligne de communication d'un connecteur ou moyen de communication similaire. Les contrôleurs de noeud (20) sont couplés par exemple à un circuit (14) d'entrées/sorties et à plusieurs processeurs (12). A chaque processeur (12) est associée au moins une mémoire (13). Dans ce type de serveur connu de l'art antérieur, chaque contrôleur de noeud (20) est doté d'un répertoire d'importation (16) et d'un répertoire d'exportation (17), comme représenté sur les figures 5 et 7. Le contrôleur de noeud (20) de chaque noeud (10) coopère avec un contrôleur de mémoire (15) gérant les adresses mémoires à l'intérieur du noeud, grâce à au moins un répertoire (150) référençant les adresses mémoire utilisées par les processeurs (12) à l'intérieur du noeud (10), comme représenté sur la figure 5. Dans le cadre du protocole de cohérence de cache d'une machine SMP, il faut faire face au problème du grand nombre d'agents à identifier dans un espace de nommage limité. Pour rappel, un agent est une entité qui participe au protocole de cohérence de cache en envoyant et recevant des paquets et en leur appliquant le traitement protocole adéquat. Il existe différents types d'agents et chaque agent possède généralement un identifiant qui doit permettre de l'identifier de manière unique. Toutefois, deux agents associés à un même processeur peuvent partager un même identifiant s'il est possible de les différencier systématiquement (type d'agent différent par exemple).

Le protocole de cohérence de cache, notamment le protocole « CSI » (« Common System Interface »), permet l'utilisation de deux formats de paquets :
- les paquets à en-tête standard ; et
- les paquets à en-tête étendu.

L'avantage de l'utilisation des en-têtes standards est leur taille réduite. En contrepartie leur utilisation a l'inconvénient de proposer un espace de nommage limité à un certain nombre d'identifiants servant à identifier les processeurs, les interfaces d'entrée/sortie (« I/O Hub », selon la terminologie anglo-saxonne), les contrôleurs de noeuds et les contrôleurs de mémoire. Dans le cadre de la conception de grands serveurs de type « SMP », où le nombre d'agents à identifier est important, cette limitation impose le découpage du système en « noeuds » ayant chacun leur propre espace de nommage CSI. A l'interface de ces différents « noeuds » est placé un contrôleur de noeud servant de « proxy » (mandataire) vers les autres noeuds. En référence aux figures 5 et 7, le « contrôleur » (20) endosse alors le rôle de traduction de noms d'un espace de nommage à l'autre.

Pour faire face également à la problématique d'inflation, dans un grand serveur SMP, du trafic de messages « snoops » (Messages du protocole de cohérence de cache servant à interroger les caches du système susceptibles d'avoir une copie de l'adresse mémoire référencée par un agent afin de connaître l'état des données dans le cache), une solution connue est de masquer aux agents à l'intérieur d'un noeud (10) la visibilité des agents des autres noeuds. Ce type de solution est approprié pour la double problématique du nombre élevé d'agents et du trafic élevé de messages « snoops ». Ainsi, on évite que le trafic de snoops n'augmente proportionnellement au nombre de processeurs dans le système et que le temps de réponse aux snoops n'augmente proportionnellement à la distance maximum entre deux processeurs du système. Il faut noter ici que cette distance peut devenir importante dans un grand serveur SMP en raison de la connectivité limitée des processeurs (12) et éventuellement de celle des contrôleurs de noeuds (20).

Ce masquage est réalisé concrètement dans le contrôleur de noeuds (20) qui se présente à l'intérieur du noeud (10) comme un unique agent faisant des accès aux adresses locales (au nom des processeurs et interfaces d'entrée/sortie externes au noeud) et comme un unique contrôleur de mémoire contenant toutes les adresses distantes (i.e. les adresses correspondant à des mémoires externes au noeud (10) auquel il est associé). On comprend ici qu'on utilise les adjectifs "local" ou "distant", à propos d'une adresse, en fonction de l'appartenance ou non au noeud (10) considéré. Autrement dit, une adresse est locale à un noeud A si elle est hébergée dans un module de mémoire vive associé à un agent appartenant au noeud A. Une adresse est à l'inverse distante par rapport à un noeud A si elle est hébergée dans un module de mémoire vive attaché à un agent n'appartenant pas au noeud A.

Le contrôleur NC (20) reçoit alors les paquets de l'intérieur ou de l'extérieur du noeud (10) en tant que destinataire du paquet. Puis il affecte un nouvel identifiant à ces paquets avant qu'ils ne passent de l'intérieur du noeud à l'extérieur ou inversement. Si tous les identifiants de l'espace de nommage cible ont été consommés, il fait patienter ce paquet dans une mémoire tampon interne.

En référence à la figure 7, lorsqu'un agent émet des requêtes vers les mémoires à l'intérieur du noeud (10), il est identifié dans un répertoire ou tableau (150) de ces contrôleurs de mémoire (15). Ainsi ces contrôleurs de mémoire (15) n'ont qu'une vision grossière de l'extérieur du noeud (10). Ils savent uniquement que la donnée a été exportée par un agent extérieur au noeud (10) sans savoir lequel ni dans quel noeud externe il se trouve.

Pour implémenter le filtrage des snoops, le contrôleur NC (20) du noeud (10) met en oeuvre deux répertoires (« directories ») de caches (17, 16), mémorisés dans la mémoire du contrôleur de noeud (20). Un premier, appelé répertoire (17) des adresses exportées (« Exported directory » en terminologie anglo-saxonne), référence les adresses locales exportées dans des caches de processeurs (12) d'autres noeuds et permet de savoir quels noeuds ont exporté ces adresses. Un deuxième, appelé répertoire (16) des adresses importées (« Imported Directory » en terminologie anglo-saxonne), référence les adresses distantes importées dans les caches des processeurs du noeud (10) et permet de savoir quels agents ont importé ces adresses.

Pour assurer des performances acceptables, ces deux structures mémoires sont implémentées en mémoire RAM, cette dernière pouvant notamment être implémentée en technologie SRAM (acronyme anglo-saxon de « Static Random Access Memory ») dans la puce. Les tableaux (17, 16) sont alors dimensionnés proportionnellement aux tailles des caches processeurs. Ce type de mémoire est très rapide et ne nécessite pas de rafraîchissement. Néanmoins, elle est également très chère et volumineuse.

Un problème qui se pose dans de tels systèmes connus de l'art antérieur concerne la nécessité d'une taille importante de mémoire allouée aux répertoires d'importation et d'exportation et donc le surcoût que représente l'implémentation de ces répertoires. Ainsi, lorsqu'un système comporte un grand nombre de processeurs, il faut que les contrôleurs de noeuds disposent d'une mémoire suffisante pour stocker toutes les adresses importées et exportées. En effet, la taille du répertoire d'importation d'un noeud doit être égale à la somme de la taille de tous les caches (3) des processeurs (12) de ce noeud. De même, la taille du répertoire d'exportation d'un noeud doit être égale à la somme de la taille de tous les caches (3) des processeurs (12) de tous les autres noeuds du système. Le système selon l'invention vise justement à éviter l'inconvénient du surcoût lorsque ces structures mémoire requièrent une taille importante, par exemple pour un grand serveur SMP. Il peut même être tout simplement impossible de faire tenir la quantité de mémoire nécessaire (limites technologiques) en suivant le type de solution des figures 5 et 7. Ainsi, l'invention, en résolvant ces problèmes d'implémentation des mémoires nécessaires à ces répertoires, vise également à permettre d'élaborer des systèmes contenant un nombre plus important de processeurs que ne le permet les systèmes connus de l'art antérieur, tels que ceux représentés sur les figures 5 et 7.

On peut rappeler que la quantité de mémoire qu'il est possible de placer dans le « contrôleur de cohérence de cache » d'un contrôleur NC (120) est limitée par :
- le processus employé (finesse de gravure),
- la taille de puce choisie,
- le type de mémoire implémenté (SRAM ou eDRAM).

Par ailleurs, le choix de placer une partie de la mémoire dont a besoin le « contrôleur » à l'extérieur de la puce génère un "coût" significatif en terme de temps de réponse qui rend cette possibilité peu attractive. Les performances moindres obtenues avec une mémoire externe à la puce en limiteraient donc les applications. De plus, ce type de solution se traduirait par une augmentation sensible du coût du système (prix des modules mémoire externes à ajouter au coût de la puce).

Dans ce contexte, il est intéressant de proposer une alternative permettant de pallier les inconvénients de l'art antérieur. En effet, un système comportant les 3 types de répertoires décrits ici pour les systèmes connus de l'art antérieur présente l'inconvénient de nécessiter une taille considérable des mémoires au niveau du contrôleur de noeud. En particulier, le répertoire d'exportation (exported directory) contient les adresses mémoires qui ont été exportées vers d'autres noeuds. On comprend donc que plus le système comporte un nombre important de noeuds (et de processeurs), plus ce répertoire d'exportation nécessite un espace de stockage important.

### DESCRIPTION GENERALE DE L'INVENTION

La présente invention a pour objet de pallier un ou plusieurs des inconvénients des systèmes antérieurs, en proposant un système informatique de type SMP avec des partitions en noeuds dotées de contrôleurs de noeud NC qui assurent toujours la cohérence de cache et minimise la taille de mémoire des contrôleurs de noeuds.

A cet effet, l'invention concerne un système informatique comprenant une pluralité de groupes multiprocesseur, dits noeuds, dans lequel les données traitées sont hébergées dans des mémoires des différents noeuds, les adresses mémoires utilisées pour l'hébergement des données étant localisées par le système grâce à un protocole de cohérence reposant sur l'échange de paquets entre les différents noeuds, chacun des noeuds étant associé à un contrôleur de noeud, connecté dans son noeud à au moins un processeur, les noeuds étant reliés entre eux par un réseau d'interconnexion entre lesdits contrôleurs de noeud et comprenant chacun au moins une mémoire associée à un contrôleur de mémoire, au moins un des noeuds comportant au moins un circuit d'entrées/sorties, au moins un des processeurs étant couplé à au moins un contrôleur de mémoire et à une mémoire cache, caractérisé en ce que dans chaque noeud déterminé du système, chacun des contrôleurs de mémoire comporte un répertoire associant chacune des adresses mémoires du noeud déterminé à un vecteur référençant au moins une localisation d'hébergement pour l'adresse mémoire, à l'intérieur du noeud déterminé, dit noeud local, et/ou à l'extérieur du noeud déterminé, i.e. dans un noeud dit distant, le système comprenant des moyens de paramétrer les localisations d'hébergement possibles dans chacun desdits vecteurs, et en ce que les paquets échangés entre les noeuds contiennent au moins une information de destination, déterminée notamment à partir des localisations référencées par lesdits vecteurs.

Ainsi, il est avantageusement permis de gérer efficacement les paquets concernant des adresses distantes sans requérir dans une mémoire du contrôleur de noeud un répertoire spécifique pour les adresses distantes qui occuperait une part non négligeable de la mémoire.

Selon une autre particularité, le vecteur, référençant au moins une localisation d'hébergement pour l'adresse mémoire à laquelle il est associé, comporte une pluralité de positions de bits de présence, chacune des positions correspondant à une localisation d'hébergement dans le noeud local ou dans un noeud distant.

Selon une autre particularité, chacun des contrôleurs d'interconnexion est formé avec sa mémoire dans un circuit intégré doté de moyens pour réaliser un couplage avec les autres contrôleurs d'interconnexion du système.

Selon une autre particularité, dans un noeud déterminé du système, le contrôleur de noeud associé comprend des moyens d'identification d'une provenance de paquets entrants dans ce noeud, agencés pour identifier au moins le contrôleur de noeud émetteur de ces paquets et transmettre au contrôleur de mémoire associé l'information d'identification de ce contrôleur de noeud émetteur.

Selon une autre particularité, chacun des contrôleurs de noeud comprend des moyens d'interprétation agencés pour déterminer, à partir de ladite information de destination contenue dans les paquets, la localisation de destination des adresses mémoire exportées par ce contrôleur de noeud.

Selon une autre particularité, le contrôleur de mémoire comporte des moyens d'enregistrement de l'information d'identification du contrôleur de noeud émetteur d'un paquet entrant requérant l'exportation d'une adresse mémoire, ces moyens d'enregistrement stockant cette information d'identification en tant qu'information de destination dans le vecteur correspondant à l'adresse mémoire dont l'exportation est requise par le paquet entrant.

Selon une autre particularité, dans un noeud déterminé du système, le contrôleur de noeud associé comprend au moins un répertoire d'importation référençant une pluralité d'adresses mémoire de noeuds distants qui ont été chacune importées vers un processeur du noeud local.

Selon une autre particularité, chaque contrôleur de noeud est doté de moyens d'aiguillage utilisant le répertoire d'importation du contrôleur de noeud avant d'aiguiller des paquets sortants du noeud local.

Selon une autre particularité, chaque vecteur de chacun des répertoires des contrôleurs mémoire comporte une pluralité de champs correspondants aux localisations d'hébergements possibles dans le noeud local et au moins un noeud distant, les champs correspondants au noeud local indiquant un identifiant du processeur utilisant l'adresse mémoire associée au vecteur et les champs correspondants aux noeuds distants indiquant un identifiant du contrôleur de noeud vers lequel l'adresse mémoire associée au vecteur a été exportée.

Selon une autre particularité, le vecteur comprend des données pour identifier un mode d'utilisation de l'information associée.

Selon une autre particularité, ledit mode d'utilisation d'une information est choisi parmi des modes d'utilisation permis par un protocole indiquant un état des données dans l'adresse mémoire associée au vecteur, par un statut d'utilisation de l'adresse mémoire.

Selon une autre particularité, le système forme un serveur à au moins 2 noeuds et dans lequel l'ensemble des mémoires est partagé entre tous les processeurs qui l'utilisent conjointement.

L'invention, avec ses caractéristiques et avantages, ressortira plus clairement à la lecture de la description faite en référence aux dessins annexés dans lesquels:
- la figure 1 représente schématiquement une opération d'exportation d'une ligne vers un noeud distant du système informatique selon un mode de réalisation de l'invention, avec mise à jour d'une table prévue dans le contrôleur mémoire ;
- la figure 2 montre un exemple de vecteur présent dans le tableau du contrôleur mémoire d'un processeur du système selon un mode de réalisation de l'invention ;
- la figure 3 est un schéma montrant un exemple de configuration d'un système informatique à plusieurs noeuds selon un mode de réalisation l'invention ;
- les figures 4A et 4B sont des représentations schématiques illustrant des systèmes à plusieurs noeuds pouvant implémenter les techniques de l'invention selon divers modes de réalisation ;
- la figure 5 est un schéma montrant un exemple de configuration d'un serveur à plusieurs noeuds rencontré dans l'art antérieur ;
- la figure 6 montre un exemple d'architecture SMP conventionnelle ;
- la figure 7 est un schéma d'un exemple de réalisation de l'art antérieur illustrant les rôles respectifs des tableaux d'adresses exportées et importées, implémentés dans un contrôleur de noeud ;
- la figure 8 représente schématiquement le cas d'une demande par un noeud distant d'une ligne précédemment exportée vers un autre noeud distant dans un mode de réalisation de l'invention.

### DESCRIPTION DES MODES DE REALISATION PREFERES DE L'INVENTION

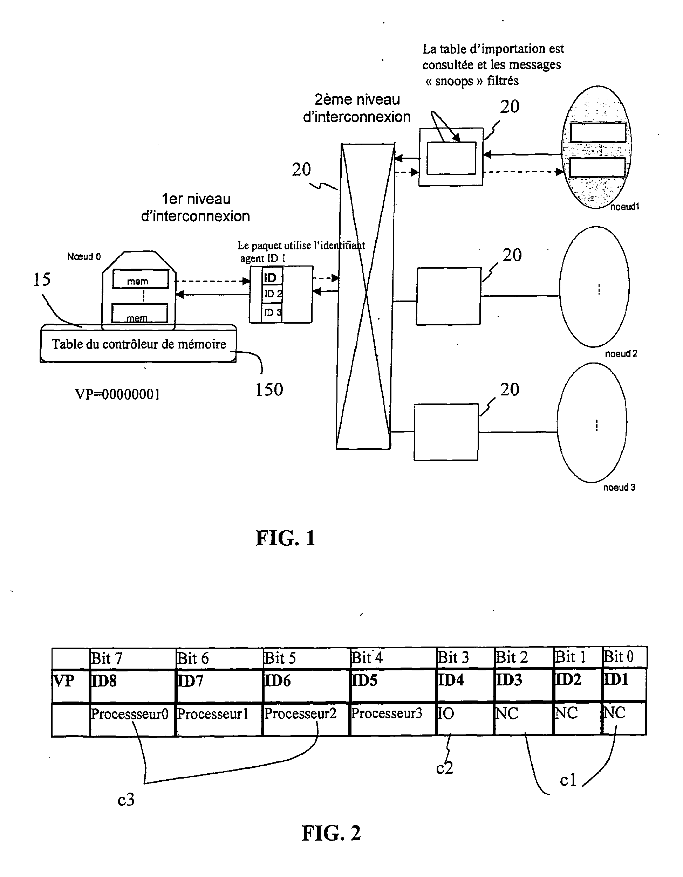

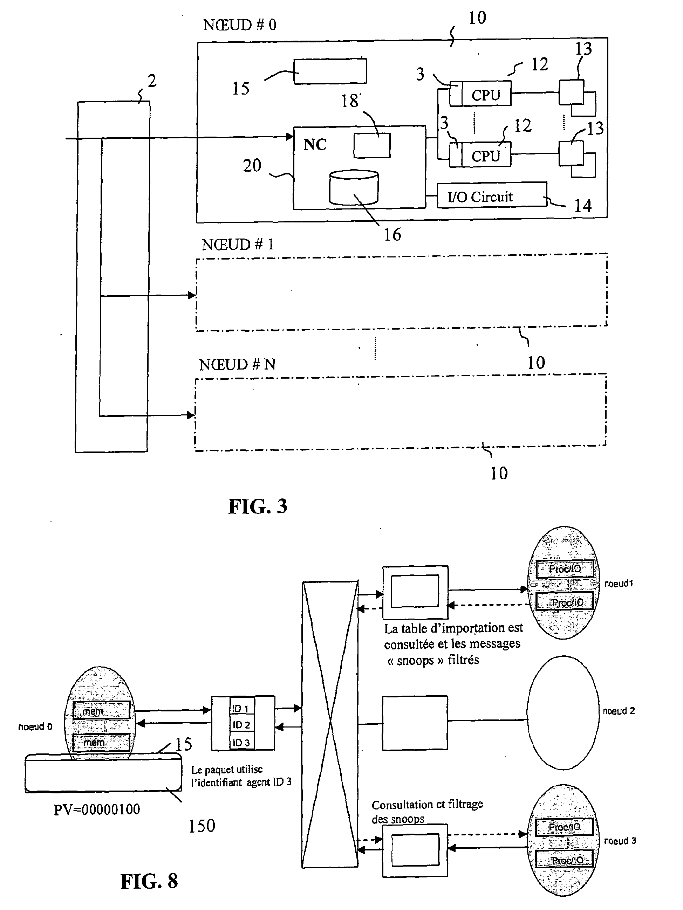

En référence aux figures 1 et 3, le système selon l'invention est à architecture multiprocesseur, par exemple de type SMP (« symmetric multiprocessing » selon la terminologie anglo-saxonne). Le système comprend une pluralité de groupes multiprocesseur (10) appelés noeuds (10). Un contrôleur de noeud (20) (« Node controller », NC, selon la terminologie anglo-saxonne) implanté dans chacun des noeuds (10) est connecté dans son groupe (10) à au moins un processeur (12). Les noeuds (10) sont reliés entre eux par un réseau d'interconnexion entre lesdits contrôleurs de noeuds (20). Chacun des noeuds comporte un ensemble de mémoires (13) associé à un contrôleur de mémoire (15) et au moins un processeur (12) couplé à au moins un contrôleur de mémoire (15) et à une mémoire cache (3). Dans l'exemple des figures, chacun des noeuds (10) comporte au moins un circuit (14) d'entrées/sorties. D'une manière générale, au moins un des noeuds (10) du système comporte au moins un circuit (14) d'entrée sortie, qui pourra être partagé par les processeurs des différents noeuds. On notera au passage que, selon divers modes de réalisation de l'invention, le contrôleur de mémoire (15) peut être intégré dans la puce du processeur, mais il peut aussi bien être implémenté sur une puce séparé, comme par exemple dans le cas des serveurs Novascale 5005. Le contrôleur de mémoire (15) gère les adresses mémoires à l'intérieur du noeud (10), grâce à au moins un répertoire (150) référençant les adresses mémoire utilisées par les processeurs (12) à l'intérieur du noeud (10). Dans certains modes de réalisation, le contrôleur de mémoire (15) comporte autant de répertoires (150) qu'il y a de mémoires (13) dans le noeud (10). On notera que le terme répertoire (« directory » en terminologie anglo-saxonne) utilisé ici ne doit pas être interprété de façon limitative et peut désigner une table ou un tableau ou toute organisation adaptée aux référencements décrits ici.

Le système informatique selon l'invention présente, de façon similaire aux systèmes de l'art antérieur décrits en référence aux figures 5 et 7, une architecture à plusieurs processeurs (12) associés chacun à un ensemble de mémoires (13). Ce type d'architecture peut permettre, pour les raisons détaillées ci-après, de créer une machine de type SMP contenant un nombre important de processeurs et de contrôleurs (ou interface) d'Entrées-Sorties (« I/O hubs » selon la terminologie anglo-saxonne), ce type de contrôleur correspondant à une puce qui sert d'interface entre le domaine CSI (à peu près équivalent au bus mémoire) et le domaine PCI Express (« Peripheral Component Interconnect Express »), la puce formant le contrôleur d'Entrées-Sorties peut jouer par ailleurs le rôle de racine de l'arborescence PCI-Express.

En référence aux figures 1, 2 et 3, un système informatique conforme à l'invention est agencé de façon à ne pas implémenter le répertoire (17) d'adresses exportées dans le contrôleur de noeud (20), pour réduire la surface de silicium utilisée. Pour cela, dans chaque noeud (10) déterminé du système, chacun des contrôleurs de mémoire (15) comporte un répertoire (150) associant chacune des adresses mémoires du noeud (10) déterminé à un vecteur (VP) référençant au moins une localisation d'hébergement pour l'adresse mémoire, à l'intérieur du noeud (10) déterminé, dit noeud (10) local, et/ou à l'extérieur du noeud (10) déterminé, i.e. dans un noeud (10) dit distant. Le système selon l'invention comprend des moyens de paramétrer les localisations d'hébergement possibles dans chacun desdits vecteurs (VP). Ce système selon l'invention met donc en oeuvre un protocole de cohérence de cache modifié ne nécessitant pas de répertoire d'exportation mais dans lequel les adresses mémoires utilisées sont stockées dans les répertoires (150) des contrôleurs de mémoire (15) et plus précisément dans un vecteur de présence associé à chacune des adresses mémoires des mémoires (13) associées au contrôleur de mémoire (15). Ce protocole de cohérence modifié utilise des paquets échangés entre les noeuds pour localiser les données. Une autre particularité du système selon l'invention consiste en ce que les paquets échangés entre les noeuds (10) contiennent au moins une information de destination, déterminée notamment à partir des localisations référencées par lesdits vecteurs (VP). Ainsi, le système comporte des moyens de configuration des paquets échangés pour inclure, dans les paquets émis par un noeud (10) au moins une information de destination extraite à partir des informations stockées dans les vecteurs de présence (VP). En fait, d'une manière générale, les paquets contiennent les informations nécessaires à leur adressage et le terme « moyens de configuration » doit être interprété au sens large puisque les systèmes multiprocesseurs gèrent ce type de données pour l'adressage des paquets. De même, les paquets reçus dans un noeud contiennent au moins une information de provenance du paquet. Les moyens de configuration des paquets implémentés dans le système permettent un suivi des provenances et des destinations des requêtes et des réponses (i.e. des paquets) échangés entre les noeuds pour la localisation des données requises par un processeur.

Le vecteur (VP) appelé vecteur de présence est prévu pour représenter l'état d'utilisation de chacune des adresses mémoire de chacun des noeuds (10). Pour chaque noeud (10) déterminé, ce vecteur est stocké en mémoire, dans un répertoire (150) d'au moins un des contrôleurs de mémoire du noeud (10) déterminé. Dans certains modes de réalisation de l'invention, le vecteur de présence (VP) de chacun des répertoires des contrôleurs mémoire d'un noeud peut, de manière non limitative, être de la forme illustrée à la figure 2 et permet de référencer une localisation d'hébergement pour l'adresse mémoire associée, par une position d'un bit de présence. Dans l'exemple de la figure 3, le tableau (16) des adresses importées est conservé dans le contrôleur (20). On comprend que ce type de technique selon l'invention permet d'éviter d'ajouter des modules mémoire externes et de limiter la quantité de mémoire implantée dans le contrôleur NC (20). Le fait de conserver le répertoire d'importation dans certains modes de réalisation de l'invention permet d'implémenter la fonction de filtrage des messages « snoops » de façon à limiter le trafic au sein du réseau (2). Cependant, l'invention permet également d'autres modes de réalisation dans lesquels le répertoire d'importation n'est pas implémenté non plus, de façon à laisser le maximum d'espace mémoire disponible dans les contrôleurs de noeuds (20).

Le système à architecture SMP illustré à la figure 3 comporte des NC (20) mettant par exemple en oeuvre un bus rapide et notamment le protocole Intel « CSI » pour assurer la cohérence des informations stockées dans les mémoires (13) et les caches (3). De façon connue en soi, ce protocole est utilisé dans la conception de grands serveurs ayant une architecture informatique telle que SMP. Cependant, ce protocole est modifié ici pour optimiser l'espace de stockage utilisé dans les puces. Chacun des processeurs (12) est couplé à un contrôleur de mémoire (15) et à une mémoire cache (3). La mémoire cache (3) et/ou le contrôleur de mémoire (15) peuvent être incorporés ou non dans le processeur (12).

En référence à la figure 2, il est prévu dans certains modes de réalisation de l'invention, d'adapter l'utilisation d'identifiants d'agents ID1, ID2, ID3 en prévoyant, dans le vecteur de présence (VP), des champs (c1, c2, c3) indicateurs des agents utilisateurs des données. Dans l'exemple non limitatif de la figure 2, le vecteur peut représenter notamment l'état de la donnée et comporte :
- un nombre de premiers champs (c1) égal au nombre de contrôleurs de noeuds (20) distants par rapport au noeud (10) auquel est associé ce vecteur ;
- un nombre de deuxièmes champs (c3) égal au nombre de processeurs (12) locaux (i.e., dans le noeud auquel est associé ce vecteur) ; et
- au moins un champ pour au moins une interface (14) d'entrée/sortie du noeud (10) local.

Un bit de présence dans l'un des premiers champs (c1) permet de spécifier que l'adresse mémoire associée au vecteur est hébergée au niveau d'un contrôleur de noeud (20) distant déterminé parmi les contrôleurs de noeuds (20) distants du système. On comprend donc que, contrairement au protocole de l'art antérieur dans lequel les contrôleurs de noeuds (20) distants apparaissaient tous comme étant un seul et unique agent extérieur devant le contrôleur de mémoire (15) local, chacun des contrôleurs de noeuds (20) distants sont ici référencés par le contrôleur de mémoire (15). Pour cela, comme mentionné précédemment, le système comporte des moyens d'identification de la source (provenance) des paquets. Ainsi, un contrôleur de noeud (20) recevant une requête d'un noeud (10) distant et interrogeant le contrôleur de mémoire (15), se présente à ce dernier comme la source d'où provient la requête.

Plus précisément, dans certains modes de réalisation de l'invention, dans un noeud (10) déterminé du système, le contrôleur de noeud (20) associé comprend des moyens d'identification d'une provenance de paquets entrants dans ce noeud (10), agencés pour identifier au moins le contrôleur de noeud (20) émetteur de ces paquets et transmettre au contrôleur de mémoire (15) associé l'information d'identification de ce contrôleur de noeud (20) émetteur. De plus, dans certains modes de réalisation de l'invention, chacun des contrôleurs de noeud (20) comprend des moyens (18) d'interprétation agencés pour déterminer, à partir de ladite information de destination contenue dans les paquets, la localisation de destination des adresses mémoire exportées par ce contrôleur de noeud (20). Enfin, dans certains modes de réalisation de l'invention, chacun des contrôleurs de mémoire (15) comporte des moyens d'enregistrement de l'information d'identification du contrôleur de noeud (20) émetteur d'un paquet entrant requérant l'exportation d'une adresse mémoire, ces moyens d'enregistrement stockant cette information d'identification en tant qu'information de destination dans le vecteur (VP) correspondant à l'adresse mémoire dont l'exportation est requise par le paquet entrant.

D'autre part, un bit de présence dans l'un des deuxièmes champs (c3) du vecteur de présence (VP) permet de spécifier que l'adresse mémoire associée au vecteur est hébergée au niveau d'un processeur déterminé parmi les processeurs (12) locaux. Ainsi, le vecteur (VP), référençant au moins une localisation d'hébergement pour l'adresse mémoire à laquelle il est associé, comporte une pluralité de positions de bits de présence, chacune des positions correspondant à une localisation d'hébergement dans le noeud (10) local ou dans un noeud (10) distant.

D'une manière générale, dans divers modes de réalisation de l'invention, chaque vecteur (VP) de chacun des répertoires des contrôleurs mémoire comporte une pluralité de champs correspondants aux localisations d'hébergements possibles dans le noeud (10) local et au moins un noeud (10) distant, les champs correspondants au noeud local indiquant un identifiant du processeur (12) utilisant l'adresse mémoire associée au vecteur et les champs correspondants aux noeuds (10) distants indiquant un identifiant du contrôleur de noeud (20) vers lequel l'adresse mémoire associée au vecteur a été exportée.

En référence aux figures 1 et 3, chacun des contrôleurs de mémoire (15) d'un noeud (10) déterminé du système dispose d'une table (150) associant respectivement le vecteur à une adresse mémoire de l'ensemble de mémoires (13) associée au noeud (10) déterminé (noeud local)..

Dans l'exemple de la figure 1, le système comporte quatre noeuds, avec par exemple quatre processeurs (12), un contrôleur (ou interface) d'entrée/sortie (14) et un contrôleur de noeud (20). Dans cet exemple, chaque contrôleur de noeud (20) comprend un tableau (16) d'adresses importées. Dans cet exemple, un processeur (12) du noeud 1 accède à une adresse mémoire distante, c'est-à-dire une adresse mémoire d'un processeur d'un noeud différent. En l'occurrence, le processeur du noeud 1 qui accède à une mémoire du noeud 0 est représenté par l'identifiant « ID 1 » dans le noeud 0. Ceci résulte du fait qu'on masque aux agents d'un noeud la visibilité complète des agents des autres noeuds. Les agents internes n'ont qu'une visibilité grossière des agents externes : les agents externes appartenant à un même noeud sont en effet typiquement représentés comme un seul agent, auquel correspond généralement un seul identifiant, ici représenté par l'identifiant du contrôleur de noeud (20) distant. Cependant, le noeud (ou plus précisément le contrôleur de noeud ici) d'où provient la requête est identifié et cette provenance de la requête est conservée jusqu'à être stockée dans le vecteur de présence (VP).

Lorsqu'un processeur (12) du noeud 2 accède une adresse mémoire du noeud 0, le processeur (12) du noeud 2 sera représenté de la même façon par « ID 2 » (et un processeur du noeud 3 par « ID 3 »). On introduit donc un niveau hiérarchique intermédiaire entre le processeur (12) local et les processeurs distants. Le contrôleur de noeud (20) est le représentant local des processeurs situés dans les noeuds distants. Le contrôleur de noeud (20) est virtuellement démultiplié en autant d'agents que de noeuds distants. Pour chaque noeud distant concerné, le contrôleur de noeud (20) qui interface le noeud local avec les noeuds distants se voit attribué un identifiant différent. Ainsi le contrôleur de noeud (20) se présente à l'intérieur du noeud comme plusieurs agents.

Pour revenir à l'exemple de la figure 1, le contrôleur de noeud (20) du noeud 0 va identifier la provenance de la requête d'accès par la position du bit de présence qui indique l'identifiant ID1 : VP= 00000001 (le Bit 0 correspond à l'identifiant ID1 comme indiqué dans la figure 2). Ce type d'interprétation peut être réalisé par les moyens (18) d'interprétation du contrôleur de noeud (20) qui interprètent la position du bit de présence et permettent l'identification par le contrôleur de noeud (20) de la destination prise par les adresses mémoire qui vont être exportées. Les moyens (18) d'interprétation sont par exemple implémentés au niveau du contrôleur de noeud (20).

Dans l'exemple de la figure 1, la donnée est donc fournie à la destination d'exportation, c'est-à-dire à l'agent ID1 du point de vue du noeud 0. La table (150) du contrôleur de mémoire (15) est mise à jour afin de mémoriser que la ligne est exportée par l'agent ID1. Cette mise à jour peut être réalisée par un paramétrage adéquat de la position du bit de présence et/ou un paramétrage adapté du vecteur permettant au contrôleur de noeud (20) local de récupérer au moins la destination d'exportation. Dans l'exemple des figures, le paramétrage donne VP = 00000001.

Ce mode de réalisation n'est pas limitatif et le vecteur peut se présenter sous toute forme adaptée aux référencements visés ici. Dans l'exemple des figures 1 et 2, lorsqu'un processeur (12) du noeud 1 accède à la mémoire dans le noeud 0, on a vu qu'il est représenté par l'identifiant ID1 dans le contrôleur de noeud (20) situé dans le noeud 0. L'identifiant « ID 1 » est dans ce cas marqué par le bit 0 dans le vecteur de présence du tableau ou table (150) du contrôleur mémoire (15), ce qui permettra de mémoriser que le contenu de l'adresse relative à ce vecteur de présence se trouve désormais dans le noeud 1. Lors d'un futur accès à cette adresse mémoire, le contrôleur de noeud (2015) consultera le répertoire (150) du contrôleur de mémoire (15) et enverra un message « snoop » avec comme identifiant cible « ID1 ». On comprend que les trois identifiants illustrés dans la figure 2 (ID1, ID2 et ID3) correspondent tous les trois au contrôleur de noeud (20) dans les tables de routage propres au noeud (10) ; le contrôleur de noeud (20) recevra donc tous les snoops ciblant des agents distants. Le contrôleur de noeud (20) est spécifiquement agencé pour décoder le noeud distant de destination en fonction de l'identifiant contenu dans le paquet reçu. Cette interprétation du noeud destination en fonction de l'identifiant (ladite information de destination déterminée notamment à partir des localisations référencées par lesdits vecteurs (VP)) permet de choisir parmi les 3 (correspondant dans le vecteur aux premiers champs (c1)), dans l'exemple représenté sur les figures. On notera que les exemples non limitatifs des figures représentent un système à 4 noeuds et que les détails donnés ici réfère à ces exemples mais que l'invention pourra bien entendu être adaptée à des systèmes comprenant au moins 2 noeuds et que les répertoires et les identifiants seront adaptés au nombre de noeuds. On obtient donc un contrôleur de noeud (20), par exemple sous la forme de circuit ASIC, qui ne nécessite pas de répertoire (« exported directory ») d'exportation (17).

La figure 8 considère l'hypothèse selon laquelle le noeud 3 demanderait la ligne précédemment exportée dans le noeud 1. En reprenant ainsi la fin de l'exemple susmentionné et illustré à la figure 1 (l'adresse mémoire ayant été exportée du noeud 0 vers le noeud 1), lorsque le noeud 3 veut accéder à l'adresse préalablement exportée vers le noeud 1, la situation est alors la suivante : la consultation du répertoire (150) dans le contrôleur de mémoire (15) au niveau du noeud 0 permet de savoir que la donnée requise a été exportée dans le noeud représenté par l'identifiant ID 1 (bit 0 du vecteur de présence). Dans ce cas, la donnée est demandée par le contrôleur de noeud (20) du noeud 0 en tant que représentant local du noeud 3. La requête initiale formulée depuis le noeud 3 ayant utilisé l'identifiant d'agent ID 3, la destination d'exportation est en effet connue du contrôleur de noeud (20). Cette donnée est fournie par le contrôleur de noeud (20) du noeud 0 en tant que représentant local du noeud 1.

Au niveau du répertoire (150) du contrôleur de mémoire (15), le vecteur (VP) est mis à jour, comme illustré à la figure 8. Pour cela, le contrôleur mémoire (15) reçoit la requête provenant de l'agent ID3. Après consultation du répertoire (150), le contrôleur de mémoire (15) notifie au contrôleur de noeud (20) que cette adresse mémoire est marquée comme étant exportée dans l'agent ID1. Dans un mode de réalisation de l'invention, un message « snoop » est alors envoyé à l'agent ID1 à l'initiative du contrôleur de noeud (20) du noeud 0. Après réception de la donnée, le vecteur associé référence cette dernière comme étant exportée dans l'agent ID3 : VP=00000100 (position correspondant au bit 2 dans l'exemple de la figure 2).

On comprend que le contrôleur de noeud (20) peut se présenter à l'intérieur du noeud (10) comme plusieurs agents grâce à sa faculté d'interpréter les identifiants ID1, ID2, ID3 (ceci étant valable à un 1^{er} niveau d'interconnexion, au sein d'un même noeud). Cette différenciation en plusieurs agents permet en fait de référencer, avec un identifiant particulier, un noeud (10) externe particulier exportant une ligne locale. Cette information est notamment mémorisée dans le contrôleur de mémoire (15), notamment dans le répertoire (150) du contrôleur de mémoire (15).

Ainsi, si le contrôleur mémoire (15) est interrogé, il est capable d'indiquer dans quel noeud (10) distant a été exportée la donnée. Dans un mode de réalisation de l'invention, ce type de différenciation remplace la fonction du tableau d'adresses exportées (« exported directory ») d'un contrôleur de noeud (20) et permet la suppression de ce tableau d'adresses exportées dans le contrôleur de noeud (20). En outre, il est ainsi gagné un espace sur la puce du contrôleur de noeud (20). Dans certains modes de réalisation, cet.espace libre permettra d'implanter un tableau (16) d'adresses importées apte à supporter des espaces de mémoire cache des processeurs (12) plus importants.

Afin de conserver une bonne latence de snoops et de contrôler la bande passante de snoops, le tableau (16) des adresses importées (« imported directory ») peut être conservé, dans certains modes de réalisation de l'invention. Ceci permet de filtrer les snoops ciblant l'intérieur d'un noeud (10) et d'améliorer la latence de ces snoops lorsqu'ils ne peuvent être filtrés. Cela n'affecte que la sous-partie traitant les adresses locales et aucunement la sous-partie de la puce gérant les paquets concernant des adresses distantes. Dans un mode de réalisation de l'invention, l'architecture du composant est découpée de façon à permettre ce mode de traitement particulier pour les adresses distantes.

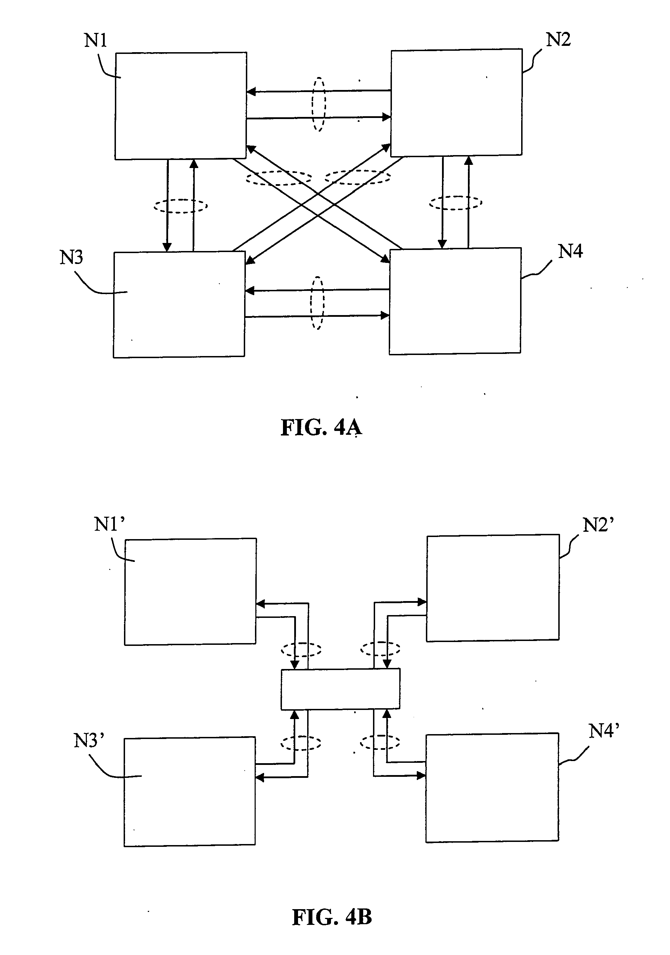

En référence aux figures 4A et 4B, on comprend que l'architecture SMP utilisée peut prévoir au moins quatre noeuds (N1, N2, N3, N4, N1', N2', N3', N4'). Les liaisons internes peuvent être des liaisons point à point qui relient les noeuds (N1, N2, N3, N4) du système directement entre eux comme illustré à la figure 4A. Les liaisons internes peuvent aussi être des liaisons point à point entre les noeuds (N1', N2', N3', N4') et un commutateur, pour réduire le nombre de liaisons. Le commutateur peut dans ce cas être doté d'un processeur couplé à une interface pour assurer la mise en oeuvre du protocole de cohérence de cache. Tout mode de connexion adapté peut naturellement être utilisé pour les liaisons entre les noeuds.

Dans un mode de réalisation, le vecteur de présence indique, non pas le noeud (10) dans lequel est présent la donnée mais l'identifiant du processeur (12) ayant la donnée. Chaque vecteur comporte dans ce cas des champs permettant d'indiquer, par la position d'un bit ou autre marquage similaire, l'identifiant du processeur (12) utilisant l'adresse mémoire associée au vecteur. La configuration du vecteur de présence peut être adaptée comme peut l'apprécier l'homme du métier.

De plus, dans certains modes de réalisation, le vecteur (VP) comprend des données pour identifier un mode d'utilisation de l'information associée. Ledit mode d'utilisation d'une information est choisi parmi des modes d'utilisation permis par un protocole indiquant un état des données dans l'adresse mémoire associée au vecteur, par un statut d'utilisation de l'adresse mémoire. Ainsi, par exemple, un contrôleur de noeud (20) recevant une requête d'un noeud (10) distant et interrogeant le contrôleur de mémoire (15) pourra déterminer si un processeur du noeud (10) local possède dans son cache (3) des données dans un état qui justifie d'utiliser une adresse mémoire particulière plutôt qu'une autre. Selon une forme de réalisation de l'invention, le vecteur de présence (VP) peut comporter une information identifiant le mode d'utilisation de la données, notamment en utilisant le protocole MESI:
- M - Modified (Modifié) : La donnée n'est présente que dans le cache considéré, et est sale (dirty), c'est à dire qu'elle a été modifiée par rapport à la valeur en mémoire de stockage. La ligne en mémoire de stockage doit être écrasée par la version locale avant que d'autres puissent la lire, puisqu'elle n'est plus à jour.
- E - Exclusive (Exclusif) : La donnée n'est présente que dans le cache considéré, mais est *propre,* c'est à dire inchangée par rapport à la mémoire de stockage.
- S - Shared (Partagé) : Indique que cette ligne est peut-être dans d'autres caches. Il peut être en outre, indiqué l'ensemble des noeuds ou des processeurs utilisant cette donnée.
- **I** - Invalid (Invalide) : Indique que cette donnée n'est plus à jour.

Un des avantages de l'invention est une réduction de la taille de mémoire dans chaque contrôleur de noeud (donc une réduction significative de la surface de silicium utilisée) puisqu'il n'est plus nécessaire d'implanter un répertoire volumineux des adresses de chaque information en partage exportée dans les autres noeuds. Autrement dit, on parvient à limiter la quantité de mémoire embarquée dans la puce formant le contrôleur de noeuds (20) et on contourne ainsi les difficultés à placer de la mémoire dans le contrôleur de noeuds (20).

Il doit être évident pour les personnes versées dans l'art que la présente invention permet des modes de réalisation sous de nombreuses autres formes spécifiques sans l'éloigner du domaine d'application de l'invention comme revendiqué, l'invention ne devant pas être limitée aux détails donnés ci-dessus. Le nombre de noeuds (10) et de processeurs (12) appartenant à un même noeud peut ainsi varier selon les besoins comme peut l'apprécier l'homme du métier.

## Revendications

1. Système informatique comprenant une pluralité de groupes multiprocesseur, dits noeuds (10), dans lequel les données traitées sont hébergées dans des mémoires des différents noeuds (10), les adresses mémoires utilisées pour l'hébergement des données étant localisées par le système grâce à un protocole de cohérence reposant sur l'échange de paquets entre les différents noeuds (10), chacun des noeuds (10) étant associé à un contrôleur de noeud (20), connecté dans son noeud (10)à au moins un processeur (12), les noeuds (10) étant reliés entre eux par un réseau (2) d'interconnexion entre lesdits contrôleurs de noeud (20) et comprenant chacun au moins une mémoire (13) associée à un contrôleur de mémoire (15), au moins un des noeuds (10) comportant au moins un circuit (14) d'entrées/sorties, au moins un des processeurs (12) étant couplé à au moins un contrôleur de mémoire (15) et à une mémoire cache (3), **caractérisé en ce que** dans chaque noeud (10)déterminé du système, chacun des contrôleurs de mémoire (15) comporte un répertoire (150) associant chacune des adresses mémoires du noeud (10)déterminé à un vecteur (VP) référençant au moins une localisation d'hébergement pour l'adresse mémoire, à l'intérieur du noeud (10) déterminé, dit noeud (10) local, et/ou à l'extérieur du noeud (10) déterminé, i.e. dans un noeud (10) dit distant, le système comprenant des moyens de paramétrer les localisations d'hébergement possibles dans chacun desdits vecteurs (VP), et **en ce que** les paquets échangés entre les noeuds (10) contiennent au moins une information de destination, déterminée notamment à partir des localisations référencées par lesdits vecteurs (VP).

2. Système selon la revendication 1, **caractérisé en ce que** le vecteur (VP), référençant au moins une localisation d'hébergement pour l'adresse mémoire à laquelle il est associé, comporte une pluralité de positions de bits de présence, chacune des positions correspondant à une localisation d'hébergement dans le noeud (10) local ou dans un noeud (10) distant.

3. Système selon la revendication 1 ou 2, dans lequel chacun des contrôleurs d'interconnexion (20) est formé avec sa mémoire dans un circuit intégré doté de moyens pour réaliser un couplage avec les autres contrôleurs d'interconnexion du système.

4. Système selon une des revendications 1 à 3, **caractérisé en ce que**, dans un noeud (10) déterminé du système, le contrôleur de noeud (20) associé comprend des moyens d'identification d'une provenance de paquets entrants dans ce noeud (10), agencés pour identifier au moins le contrôleur de noeud (20) émetteur de ces paquets et transmettre au contrôleur de mémoire (15) associé l'information d'identification de ce contrôleur de noeud (20) émetteur.

5. Système selon une des revendications 1 à 4, **caractérisé en ce que** chacun des contrôleurs de noeud (20) comprend des moyens (18) d'interprétation agencés pour déterminer, à partir de ladite information de destination contenue dans les paquets, la localisation de destination des adresses mémoire exportées par ce contrôleur de noeud (20).

6. Système selon une des revendications 4 et 5, **caractérisé en ce que** le contrôleur de mémoire (15) comporte des moyens d'enregistrement de l'information d'identification du contrôleur de noeud (20) émetteur d'un paquet entrant requérant l'exportation d'une adresse mémoire, ces moyens d'enregistrement stockant cette information d'identification en tant qu'information de destination dans le vecteur (VP) correspondant à l'adresse mémoire dont l'exportation est requise par le paquet entrant.

7. Système selon une des revendications 1 à 6, **caractérisé en ce que** dans un noeud (10) déterminé du système, le contrôleur de noeud (20) associé comprend au moins un répertoire (16) d'importation référençant une pluralité d'adresses mémoire de noeuds (10) distants qui ont été chacune importées vers un processeur (12) du noeud (10) local.

8. Système selon la revendication 7, **caractérisé en ce que** chaque contrôleur de noeud (20) est doté de moyens d'aiguillage utilisant le répertoire d'importation (16) du contrôleur de noeud (20) avant d'aiguiller des paquets sortants du noeud (10) local.

9. Système selon une des revendications 1 à 8, **caractérisé en ce que** chaque vecteur (VP) de chacun des répertoires des contrôleurs de mémoire comporte une pluralité de champs correspondants aux localisations d'hébergements possibles dans le noeud (10) local et au moins un noeud (10) distant, les champs correspondants au noeud local indiquant un identifiant du processeur (12) utilisant l'adresse mémoire associée au vecteur et les champs correspondants aux noeuds (10) distants indiquant un identifiant du contrôleur de noeud (20) vers lequel l'adresse mémoire associée au vecteur a été exportée.

10. Système selon une des revendications 1 à 9, dans lequel le vecteur (VP) comprend des données pour identifier un mode d'utilisation de l'information associée.

11. Système selon la revendication 10, dans lequel ledit mode d'utilisation d'une information est choisi parmi des modes d'utilisation permis par un protocole indiquant un état des données dans l'adresse mémoire associée au vecteur, par un statut d'utilisation de l'adresse mémoire.

12. Système selon une des revendications 1 à 11, formant un serveur à au moins 2 noeuds (10) et dans lequel l'ensemble des mémoires (13) est partagé entre tous les processeurs (12) qui l'utilisent conjointement.
